# EUROPEAN PATENT SPECIFICATION

(11) **EP 4 052 566 B1**
(45) Date of publication and mention of the grant of the patent: **11.02.2026**
(21) Application number: 21160950.8
(22) Date of filing: 05.03.2021
(51) Int. Cl.: A01G 9/02, A01G 31/06, A01G 31/02

(54) **AN INDOOR GARDEN DEVICE**
INNENGARTENVORRICHTUNG
DISPOSITIF DE JARDIN D'INTÉRIEUR

(43) Date of publication of application: 07.09.2022
(73) Proprietor: Click & Grow OÜ, 50603 Tartu (EE)
(72) Inventor: Lepp, Mattias, 50603 Tartu (EE); Uibo, Egert, 50603 Tartu (EE); Metsare, Mirjam, 50603 Tartu (EE); Järvekülg, Martin, 50603 Tartu (EE)
(74) Representative: Primrose Oy

(56) References cited:
- WO-A1-2017/062918
- KR-A- 20180 052 229
- KR-A- 20190 050 053
- US-A1- 2018 054 986
- US-A1- 2019 335 691

## Description

### FIELD OF THE INVENTION

The present invention relates to an indoor garden device for growing plants, in particular an indoor garden device for use at home or other living or working spaces, and in particular to optimizing the production of food plants indoors.

### BACKGROUND OF THE INVENTION

Prior art indoor garden devices typically comprise stationary plant containers arranged in connection with a plate fixedly connected to a liquid vessel.

Prior art indoor garden devices also comprise only one or two rows of plant containers provided to the plate because then the user can reach all the plants. When there are more than two rows of plant containers arranged in connection with the plate, the plant containers in the middle of the plate are inaccessible to the user or at least poorly accessible when the plants are ready for harvest.

Some indoor garden devices may comprise removable plant containers, but the plate is always fixedly provided to the liquid vessel such that the place of the plate is always the same.

The document US 2019/335691 discloses an aeroponic system comprising multiple aeroponic units and water cycle components, LED lights, sensors, and control components to support and operate the aeroponic units.

One of the problems associated with the prior art is that the prior art indoor garden devices do not take into account that the user may want to grow edible green plants or fruiting plants in phases so that there is always something ready to harvest. The prior art indoor garden devices provide the same conditions for all growing plants and the stationary plant containers make it difficult to grow the plants in stages.

### BRIEF DESCRIPTION OF THE INVENTION

An object of the present invention is to provide an indoor garden device which solves the problems of the prior art and provides an indoor garden device in which edible plants can be grown in phases.

The objects of the invention are achieved by an indoor garden device which is characterized by what is stated in the independent claim 1. The preferred embodiments of the invention are disclosed in the dependent claims.

The invention is based on the idea of providing an indoor garden device which is able to grow edible green plants, herbs or fruiting plants in phases such that user can have plants which are ready for harvest at all times.

The indoor garden device enables grouping of plants according to their stage of growth or harvest time, thus the plants can be started, rearranged in the device and harvested from the device in groups in a convenient manner instead of handling each plant separately.

An indoor garden device for growing plants according to the invention comprises a frame, at least two trays each having an upper surface and at least two plant containers, and at least one liquid vessel for containing liquid. The at least one liquid vessel is arranged to provide liquid to the plant containers. The at least two trays are supported removably and separately on the frame.

According to the invention the frame comprises frame support surfaces and each tray comprises respective tray support surfaces. Each tray is supported on the frame via support surfaces such that the trays are movable relative to the frame. In other words, the trays are supported on the frame support surfaces of the frame via the tray support surfaces of each tray.

According to the invention the at least two trays are supported adjacently on the frame.

According to one alternative embodiment of the invention each tray comprises the liquid vessel arranged in connection with the tray such that the liquid vessel is movable together with the tray relative to the frame. In other words, each tray comprises an own liquid vessel and the trays together with their liquid vessels are arranged movably in connection with the frame such that the tray and liquid vessel combination move in one piece relative to the frame.

According to the invention the liquid vessel for containing liquid has a bottom and side walls extending from the bottom upwards forming an open top providing an opening to the liquid vessel. The open top of the liquid vessel forms the frame and the at least two trays are supported removably and separately on the open top of the liquid vessel such that the trays cover at least part of the opening of the liquid vessel and form a lid of the liquid vessel. The upper surface of each tray faces in a direction away from the bottom of the liquid vessel when the trays are provided in place in connection with the liquid vessel over the opening of the liquid vessel. The trays preferably cover together the whole opening of the liquid vessel.

According to the invention the at least two trays are supported adjacently on the open top of the liquid vessel. The trays are preferably provided on the open top of the liquid vessel such that the trays are arranged side by side without leaving a space between the adjacent trays. The trays preferably comprise a handle which can be used when removing the tray from the indoor garden device or when moving the tray relative the liquid vessel.

According to the invention the bottom and the side walls of the liquid vessel form one uniform liquid space for the liquid and for the at least two trays. This means that liquid provided in the liquid space is evenly distributed over the entire liquid vessel, and that the trays are free to move along the open top of the liquid vessel and relative to the liquid vessel such that the trays can remain all the time in contact with the liquid vessel although the plant containers in connection with the trays extend from the tray towards the bottom of the liquid vessel in the liquid space.

According to the invention the liquid vessel can be provided with at least one longitudinally extending wall for dividing the liquid vessel into multiple longitudinal liquid spaces, the at least one longitudinally extending wall can be arranged such that the at least two trays are movable in the direction of the at least one longitudinally extending wall. This means that the trays can move along the open top of the liquid vessel and although the plant containers extend into the liquid space, the longitudinal wall can be provided to the liquid vessel such that the trays are able to move along the longitudinal direction of the liquid vessel, i.e. along the direction of the walls.

According to the invention the open top of the liquid vessel comprising frame support surfaces on opposite sides of the opening, and each tray comprising respective tray support surfaces. Each tray being supported on the open top of the liquid vessel via the tray support surfaces and the frame support surfaces. This means that the connection between the trays and the liquid vessel is provided through the respective support surfaces, i.e., through the tray support surfaces contacting the frame support surfaces. The support surfaces may comprise forms such that the frame support surfaces comprise counter forms for the tray support surfaces. The support surfaces are provided to the liquid vessel and to the trays for allowing movement of the trays relative to the liquid vessel. The frame support surfaces, or the tray support surfaces, or both the frame support surfaces, and the tray support surfaces are preferably formed such that the movement of the trays is allowed in a longitudinal direction of the surfaces but not in a width direction of the surfaces. This way the movement of the trays is limited to the longitudinal direction of the liquid vessel only, and the ends of the liquid vessel can be provided with stop elements if necessary, to prevent the trays to slide out from the liquid vessel. Several adjacent trays can be moved longitudinally in a single movement because the trays are in contact with each other. During this movement, the trays are not moved relative to each other, but all move at the same pace together as a cohesive set, so that any contacts of plants growing on the trays remain undisturbed during the movement.

According to the invention the frame support surfaces may have rails, and the tray support surfaces may comprise respective grooves for the rails.

According to the invention the opening of the liquid vessel having a length, and the frame support surfaces extend along the length of the opening. The opening of the liquid vessel having a length and a width which the length is greater than the width, and the frame support surfaces are provided along the length of the opening.

According to the invention each tray is supported on the open top of the liquid vessel via the tray support surfaces and the frame support surfaces such that each tray is arranged to slide on the frame support surfaces along the length of the opening. In other words, the trays are arranged in connection with the liquid container such that each tray is arranged to slide along the frame support surfaces so that the tray support surfaces contact the corresponding frame support surfaces of the liquid vessel as the trays slide relative to the liquid vessel.

According to the invention the frame support surfaces are longitudinal and extending along the length of the opening. The frame support surfaces are preferably arranged at the end of the side walls of the liquid vessel forming the opening, or if the opening of the liquid vessel is provided with a frame or other structure connected to the side walls and forming the opening, the frame support surfaces are then arranged in connection therewith. The frame support surfaces extend on opposite sides of the opening of the liquid vessel in a longitudinal direction of the liquid vessel, which the longitudinal direction of the liquid vessel is the dimension of the liquid vessel which is greater.

According to the invention the trays having a width such that the width of each tray corresponds to only a part of the length of the opening of the liquid vessel, and each tray is movable relative the liquid vessel along the length of the opening of the liquid vessel in the direction of the width of the trays. This means that when there are for example two trays, the width of each trays is at most half of the length of the opening of the liquid vessel. When there are for example five trays, the width of each trays is at most one fifth of the length of the opening of the liquid vessel. The trays are provided in connection with the liquid vessel such that the width direction of each trays is parallel to the length direction of the opening to the liquid vessel. This way the tray support surfaces provided at the width wise ends of the trays contact the frame support surfaces provided in connection with the opening of the liquid vessel in the longitudinal direction of the liquid vessel. The trays support surfaces are provided on opposite side of the trays to the upper surface.

According to the invention the trays having a width and a length such that the length of each tray being greater than a width of the opening of the liquid vessel such that each tray extends over the opening of the liquid vessel on both sides of the opening in the width direction of the liquid vessel. This means that when the frame support surfaces are provided at the opening of the liquid vessel such that the frame support surfaces are at the end edge of the side walls or on the frame forming the opening, then the trays have to extend over the opening so that the tray support surfaces come into contact with the frame support surfaces.

According to the invention the liquid vessel comprises a first frame support surface provided on a first side of the opening and extending along the length of opening, and a second frame support surface provided on a second side of the opening and extending along the length of the opening. Each tray comprises a first tray support surface and a second tray support surface, the first and second tray support surfaces are arranged spaced apart from each other and arranged to extend along the width of the tray. The first tray support surface is supported to the first frame support surface and the second tray support surface is supported to the second frame support surface such that the first and second tray support surfaces extend in direction of the length of the opening and the tray is supported on the open top of the liquid vessel and arranged to slide on the first and second frame support surfaces along the length of the opening. The frame support surfaces may be provided to the liquid vessel on top edge of the side walls, or on top of the liquid vessel having a frame or other structure forming the opening to the liquid vessel. Alternatively, the frame support surfaces may be provided to inner sides of the side walls forming the liquid space or to inner surfaces of the frame or other structure such that the frame support surfaces are provided within the opening. The frame support surfaces may be for example rails extending within the opening in the vicinity of the side walls.

According to the invention the plant containers are provided in each tray such that the plant containers extend on the opposite side of the upper surface of the tray. This means that the trays are provided with an opening to the plant container extending on the opposite side of the tray than the upper surface of the tray. Alternatively, the trays are provided with openings for receiving separate plant containers. The plant containers may be provided to the trays such that part of the plant container extends on the upper surface side of the tray and part of the plant container extends on the opposite side of the tray than the upper surface.

According to the invention each plant container is provided with a liquid connection arranged to provide liquid from the liquid vessel to the plant container. One example of the liquid connection between the plant container and the liquid vessel is a wick extending from the plant container towards the bottom of the liquid vessel. The wick is preferably arranged to extend from a bottom of the plant container towards the bottom of the liquid vessel as the tray is provided at its place in connection with the liquid vessel. Another example of the liquid connection between the plant container and the liquid vessel is an open bottom or at least party open bottom of the plant container.

According to the invention the indoor garden device comprises a lighting system comprising multiple light sources for providing light to plants growing in the plant containers, the light sources are arranged above the open top of the liquid vessel such that the light sources provide light towards the upper surface of the trays.

In a preferred embodiment of the invention the indoor garden device comprises at least three, four, or even five trays in connection with the liquid vessel so that the indoor garden device can be used on a weekly basis so that one tray of plants is harvested each week. Thus, when cultivating plants that take five weeks to harvest, an indoor garden device with five trays is needed.

Edible green plants or vegetables generally require 4-5 weeks to be ready for harvest and herbs may require even 6-7 weeks to be ready for harvest, and with the indoor garden device according to the invention the plants can be cultivated in stages so that when the primary tray produces a harvest, the next tray produces one week later and the next tray to that two weeks later and so on, depending on the amount trays. If the indoor garden device has 4 or 5 trays, one tray of grown plants can be removed from the indoor garden devise for consumption each week, creating continuous availability of produce. In a case of growing herbs, the indoor garden device may have 6-7 trays. An advantage of the indoor garden device according to the invention is that the device can provide continuous availability of ready to eat plants. The user of the device does not need to control the device all the time and the need of knowing the maturity of the plants and taking care of the plants is minimized. The liquid vessel provides sufficient liquid space for liquid according to the harvest schedule and harmful growth is prevented in the liquid space because the trays cover the whole opening of the liquid vessel. A further advantage of the invention is that all the plants are accessible because the trays are removable. Plant cultivation can be optimized by arranging the trays in the device in the order of plant growth, so that the advanced plants do not overshadow the newly sown plants.

### BRIEF DESCRIPTION OF THE DRAWINGS

The invention is described in detail by means of specific embodiments with reference to the enclosed drawings, in which
Figure 1 shows an indoor garden device according to the invention;
Figure 2 shows an indoor garden device according to an alternative embodiment of the invention;
Figure 3a shows an indoor garden device according to the invention as seen from side;
Figure 3b shows a liquid vessel and trays of the indoor garden device shown in figure 3a;
Figure 4a shows an indoor garden device according to the invention as seen from side;
Figure 4b shows a liquid vessel and trays of the indoor garden device shown in figure 4a;
Figure 5a shows an indoor garden device according to the invention as seen from side;
Figure 5b shows a liquid vessel and trays of the indoor garden device shown in figure 5a;
Figure 6a shows a liquid vessel of an indoor garden device according to the invention;
Figure 6b shows an embodiment of a tray of an indoor garden device according to the invention;
Figure 6c shows another embodiment of a tray of an indoor garden device according to the invention.

### DETAILED DESCRIPTION OF THE INVENTION

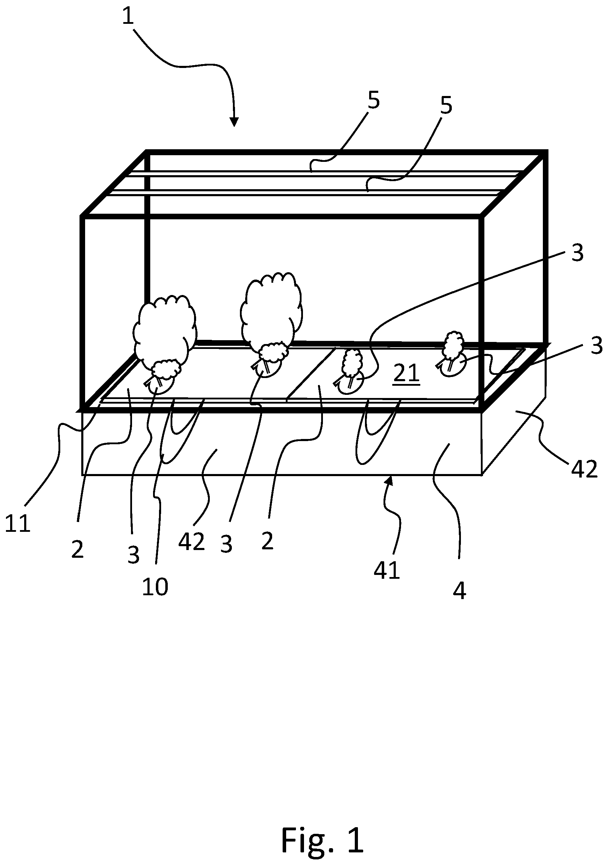

Figure 1 shows an indoor garden device 1 according to the invention which comprises a liquid vessel 4 having a bottom 41 and side walls 42 extending from the bottom 41 upwards. The liquid vessel 4 is provided with trays 2 in connection with an open top of the liquid vessel 4 so that the trays 2 are on the liquid vessel 4 closing an opening into a liquid space of the liquid vessel 4. The embodiment of the indoor garden device 1 shown in figure 1 comprises two trays 2 provided to close the liquid space of the liquid vessel 4. Each tray 2 comprises an upper surface 21 facing away from the liquid vessel 4 and being provided with at least two plant containers 3. The plant containers 3 may be fixedly arranged to the tray 2 or they may be removably arranged to the tray 2 such that the tray 2 comprises openings for the plant containers 3 which then are arranged to extend through the openings such that a bottoms of the plant containers 3 are toward the bottom of the liquid vessel 4. The trays 3 are provided with handles 10 for removing the trays 3 from the indoor garden device 1 and for moving the trays in connection with the liquid vessel 4.

The indoor garden device 1 according to the invention and shown in figure 1 comprises a frame 11 such that the open top of the liquid vessel 4 forms the frame 11 and the at least two trays 2 are supported removably and separately on the open top of the liquid vessel 4 such that the trays 2 cover at least part of the opening 43 of the liquid vessel 4 and form a lid of the liquid vessel 4. The frame 11 comprises frame support surfaces and each tray 2 comprises respective tray support surfaces 22 such that each tray 2 is supported on the frame 11 via the support surfaces such that the trays 2 are movable relative to the frame 11.

In the embodiment of the indoor garden device 1 shown in figure 1 the indoor garden device 1 is provided with a lighting system 5 comprising multiple light sources for providing light to plants growing in the plant containers. The lightning system 5 is in this embodiment arranged in connection with a frame structure connected with the liquid vessel but the implementation of the frame structure may differ. However, the light sources are preferably arranged above the open top of the liquid vessel 4 such that the light sources provide light towards the upper surface 21 of the trays 2 having the plant containers 3. The lighting system 5 is also arranged in connection with the indoor garden device 1 such that the lighting system 5 comprises light sources in the direction of a length of the opening of the liquid vessel 4. This means that when the trays 2 in connection with the liquid vessel 4 are moved in the direction of the length of the opening, the lighting conditions remain the same and the growing conditions of the plants are optimized.

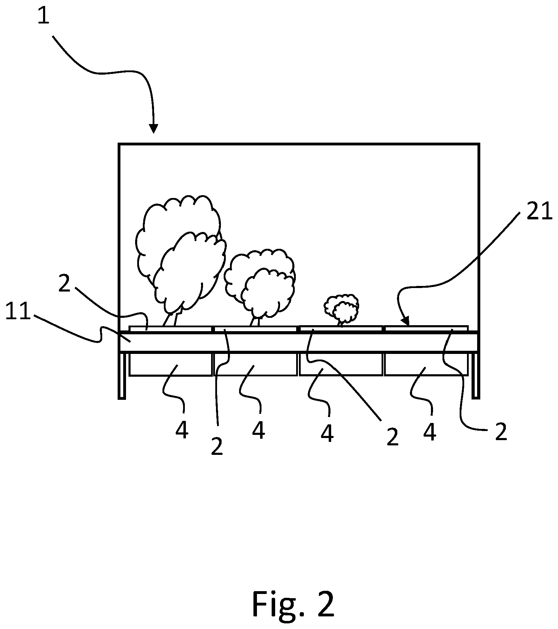

Figure 2 shows an indoor garden device 1 according to an alternative embodiment of the invention in which each tray 2 is provided with a liquid vessel 4. The trays 2 are supported removably and separately on the frame 11 such that the liquid vessel 4 is movable together with the tray 2 relative to the frame 11. The trays 2 are supported removably and separately in connection with the frame 11. The frame 11 comprises frame support surfaces and each tray 2 comprises respective tray support surfaces 22 such that each tray 2 is supported on the frame 11 via the support surfaces such that the trays 2 are movable relative to the frame 11. The upper surfaces 21 of the trays 2 are facing upward towards the lighting system 5 described in connection with the figure 1.

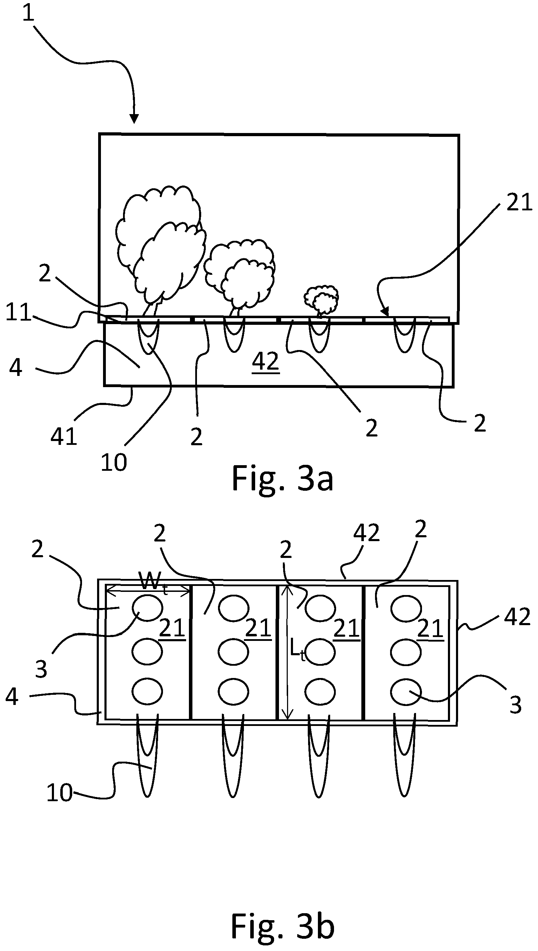

Figure 3a shows an indoor garden device 1 according to the invention as seen from side which the indoor garden device 1 comprises in this embodiment four trays 2 provided in connection with the open top of the liquid vessel 4. The open top of the liquid vessel 4 forms the frame 11 on which the trays 2 are supported movably and removably. The most optimum use of the indoor garden device 1 is that the trays 2 are arranged on the liquid vessel 4 such that the order of the plants provided in the plant containers 3 is the harvest order. This means that the first tray 2 on the left side comprises plants in the plant containers 3 which are ready for harvest and the second tray 2 comprises plants in the plant containers 3 which may be ready for harvest one week later and the third tray 3 from the left comprises plants in the plant containers 3 that are ready to harvest two weeks later and the last tray 3 on the right side comprises new seeds placed in the plant containers 3. This way the most grown plants do not shadow the new seeds, but the growing order provides optimum growing properties. The tray 2 comprising the plants ready for harvest can be removed from the indoor garden device 1 by lifting it out of the liquid vessel 4 by using the handle 10.

Figure 3b shows a liquid vessel 4 and trays 2 of the indoor garden device 1 shown in figure 3a as seen from the top. Only the side walls 42 are visible from the liquid vessel 4, which the side walls 42 form the frame 11 providing the opening to the liquid space of the liquid vessel 4, although the opening is not shown in the figure 3b because the trays 2 cover the opening. The trays 3 comprise an upper surface 21 having the plant containers 3. Although the figure shows only three plant containers 3 per tray 2, the trays 3 may comprise plant containers 3 in several rows with more than 3 plant containers per row. The trays 3 have a width Wₜ and a length Lₜ which the width Wₜ extends parallel with a length Lᵥ of the opening 43 of the liquid vessel 4. The trays 3 are arranged to slide relative to the liquid vessel 4 in the direction of the length Lᵥ of the opening 43. The handle 10 is arranged to the tray 3 on the shortest side of the tray 3 which forms the width Wₜ of the tray 3.

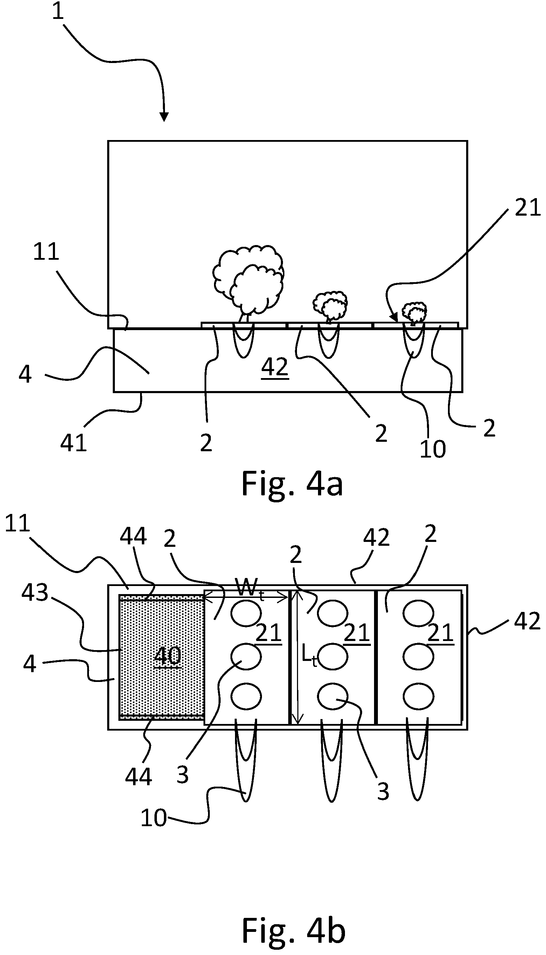

Figure 4a shows an indoor garden device 1 according to the invention as seen from side in which a primary tray 3 from the left end of the liquid vessel 4 has been removed for harvesting the plants and therefore the last tray spot is empty. The multiple secondary trays 3, i.e., the trays next to the one that has been removed are in their original position at this moment. Otherwise, the indoor garden device 1 is according to as described earlier in connection with figure 3a.

Figure 4b shows a liquid vessel 4 and trays 2 of the indoor garden device 1 shown in figure 4a as seen from top. As the primary tray 2, i.e. the first tray 2 in the left has been removed, the liquid space 40 of the liquid vessel 4 is shown. The liquid space 40 is a unitary liquid space 40 such that the trays 2 can be moved along the length Lᵥ of the opening 43 and the plant containers 3 extending from the tray 2 to the liquid space 40 do not stick or collide with anything but are freely movable together with the tray 2. The tray 2 following the primary already removed tray 2 can now be moved to the primary position intended for the plants next ready for harvest. Thereafter, the trays 2 following to that can be moved accordingly. The trays 2 are easy to move by using the handles 10 that are connected to each tray 2. The trays 2 slide on the liquid vessel 4 by means of frame support surfaces 44 arranged on opposite sides of the opening 43 of the liquid vessel 4. Each tray 2 also comprises corresponding tray support surfaces 22 such that the trays 2 are supported on the liquid vessel 4 via the tray support surfaces 22 and the frame support surfaces 44, which are connected each other. The liquid vessel 4 having a top surface such that the side walls 42 extend between the top surface and the bottom 41 of the liquid vessel 4. The top surface of the liquid vessel 4 may be formed from the end edges of the side walls 42 or the side walls 42 may be provided with a top structure at the ends of the side walls which form the top surface of the liquid vessel 4 around the opening 43. The open top of the liquid vessel 4 which is formed from the top surface or the top structure surrounding the opening to the liquid vessel 4 forms the frame 11 on which the trays 2 are supported movably and removably. The frame support surfaces 44 of the frame 11 are preferably arranged to the liquid vessel 4 to the top surface of the liquid vessel 4 or to the inner surface of the side walls 42. Alternatively, the liquid vessel 4 may comprise frame support surfaces 44 which are separate from the side walls 42 or from the top surface. In this case, a rail running from the end to the end of the opening 43 in the longitudinal direction of the liquid vessel 4 or another similar arrangement is arranged in the vicinity of the side walls 42, which forms the frame support surface 44.

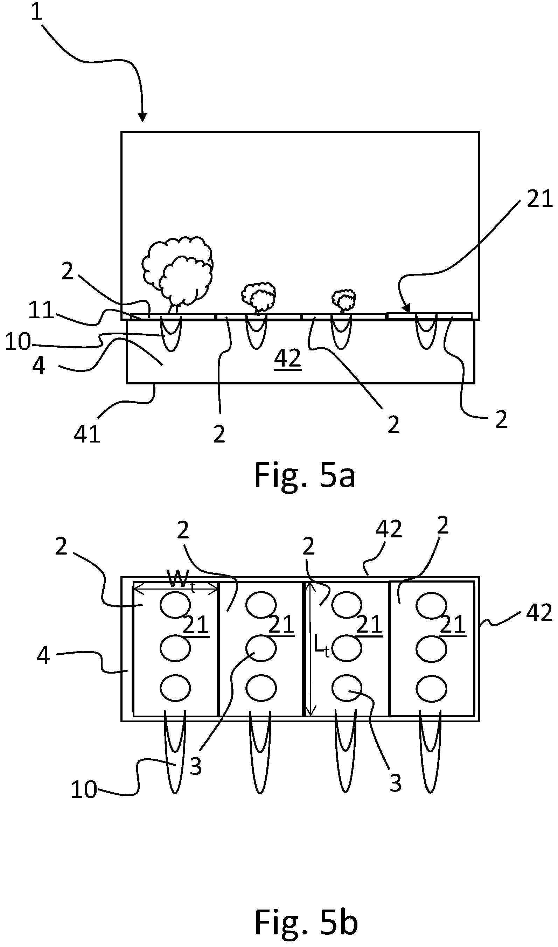

Figure 5a shows an indoor garden device 1 according to the invention as seen from side which the indoor garden device 1 is now provided with four trays 2. The three trays 2 as seen in figures 4a and 4b are moved one step forward on the liquid vessel 4 and a new tray 2 is placed in the remaining empty space. Now the plants remain in their growing order in the indoor garden device 1. The trays 2 are easy to move on the liquid vessel 4 by using the handles 10 arranged to the trays 2 and by sliding the trays 2 on the frame support surfaces 44 of the frame 11 of the liquid vessel 4. The trays 2 comprise the tray support surfaces 22 preferably on the underside of the trays 2, which the underside is opposite to the upper surfaces 21 of the trays 2.

Figure 5b shows a liquid vessel 4 and trays 2 of the indoor garden device 1 shown in figure 5a as seen from top. The trays 2 are arranged on the liquid vessel 4 such that they cover the whole opening 43 when all the trays 2 are on their place so that harmful growth is prevented in the liquid space 40. Therefore, the length Lᵥ of the opening 43 corresponds to the sum of the width Wₜ of the two or more trays 2. In other words, the indoor garden device 1 comprises a predetermined number of trays 2 each having the width Wₜ, and the length Lᵥ of the opening 43 is the sum of the width Wₜ of the predetermined number of trays 2, which the predetermined number of trays 2 is two or more. The plant containers 3 are arranged in connection with the trays 2 for example in one or more rows. Although the figure 5b shows that there are three plant containers 3 at each tray 2, the number of plant containers 3 may be greater.

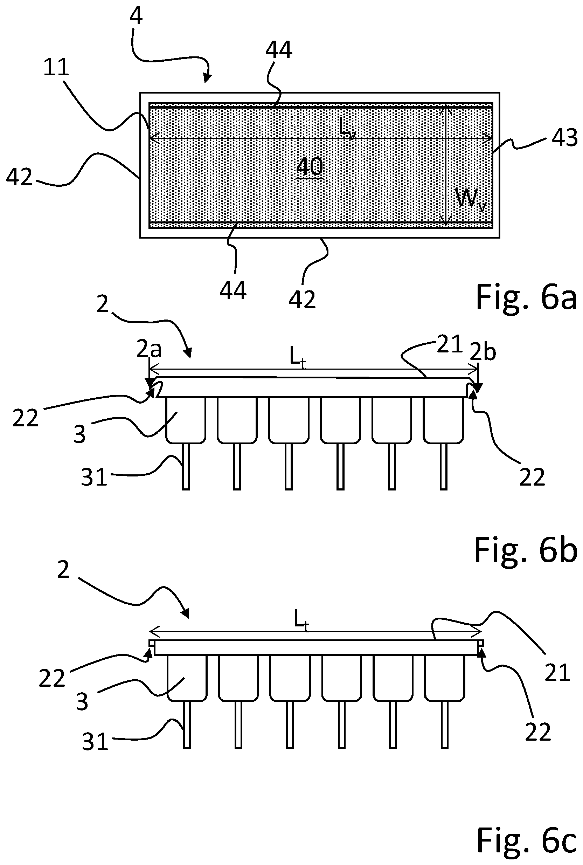

Figure 6a shows a liquid vessel 4 of an indoor garden device 1 according to the invention, which the liquid vessel 4 comprises side walls 42 forming the frame 11 surrounding the opening 43 to the liquid space 40. The opening 43 of the liquid vessel 4 on top of the liquid vessel 4 has a width Wᵥ and a length Lᵥ, which the length Lᵥ is greater than the width Wᵥ. The frame support surfaces 44 extend on both longitudinal sides of the opening 43. The width of the liquid vessel 4 is preferably 30 cm - 60 cm and the length of the liquid vessel 4 is preferably 30 cm - 100 cm.

Figure 6b shows an embodiment of a tray 2 of an indoor garden device 1 according to the invention, in which the tray 2 has a length Lₜ extending between a first end 2a and a second end 2b of the tray 2. The tray 2 is provided with tray support surfaces 22 such that the tray support surfaces 22 are arranged spaced apart from each other. In the embodiment shown in figure 6b the tray support surfaces 22 are provided to the first end 2a and to the second end 2b of the tray 2 on the under surface of the tray 2, which the under surface is on the opposite side of the tray 2 than the upper surface 21. The tray 2 is provided with plant containers 3 extending from the tray 2 to the opposite side of the upper surface 21. The plant container 3 preferably comprises a liquid connection from the plant container 3 to the liquid vessel 4 which in the embodiment shown in figure 6b is a wick 31 extending from the plant container 3 in a direction away from the tray 2. In the embodiment shown in figure 6b the tray support surfaces 22 are in form of a groove provided at the ends of the tray 2. The groove surface forms the tray support surface 22 which is arranged in contact with the frame support surface of the liquid vessel 4.

Figure 6c shows another embodiment of a tray 2 of an indoor garden device 1 according to the invention. In this embodiment the tray support surfaces 22 are provided to the underside of the tray 2 as straight surfaces. As the figures 6b and 6c show, the tray support surfaces 22 can be implemented in many ways. However, the tray support surfaces 22 must be able to slide along the frame support surfaces of the liquid vessel 4 in the direction of the length of the liquid vessel 4.

The invention has been described above with reference to the examples shown in the figures. However, the invention is in no way restricted to the above examples but may vary within the scope of the claims.

## Claims

1. An indoor garden device (1) for growing plants, the indoor garden device (1) comprises a frame (11), at least one liquid vessel (4) for containing liquid, and at least two trays (2) each having an upper surface (21) and at least two plant containers (3), **characterized in that**
the plant containers (3) extend on an opposite side of the upper surface (21) of the tray (2),
the liquid vessel (4) having a bottom (41) and side walls (42) extending from the bottom (41) upwards forming an open top providing an opening (43) to the liquid vessel (4), the open top of the liquid vessel (4) forming the frame (11) and the at least two trays (2) are supported removably and separately on the frame (11) such that the trays (2) cover at least part of the opening (43) of the liquid vessel (4) and form a lid of the liquid vessel (4), the at least one liquid vessel (4) is arranged to provide liquid to the plant containers (3);
the at least two trays (2) are supported adjacently on the frame (11), the frame (11) comprises frame support surfaces (44) extending on opposite sides of the opening (43) of the liquid vessel (4) in a longitudinal direction of the liquid vessel (4) and each tray (2) comprises respective tray support surfaces (22) arranged to extend along a width of the tray (2), each tray (2) being supported on the frame via support surfaces (44, 22) such that the trays (2) are movable relative to the frame (11) and arranged to slide along the frame support surfaces (44) so that the tray support surfaces (22) contact the corresponding frame support surfaces (44) of the liquid vessel (4) as the trays slide relative to the liquid vessel (4) along the longitudinal direction of the liquid vessel (4).

2. An indoor garden device (1) according to claim 1, **characterized in that** the bottom (41) and the side walls (42) of the liquid vessel (4) forming one uniform liquid space (40) for the liquid and for the at least two trays (2).

3. An indoor garden device (1) according to any previous claim, **characterized in that** the frame support surfaces (44) having rails, and the tray support surfaces (22) comprising respective grooves for the rails.

4. An indoor garden device (1) according to claim 1, **characterized in that** the opening (43) of the liquid vessel (4) having a length (Lᵥ), and the frame support surfaces (44) extend along the length (Lᵥ) of the opening (43).

5. An indoor garden device (1) according to claim 1, **characterized in that** the frame support surfaces (44) being longitudinal and extending along the length (Lᵥ) of the opening (43).

6. An indoor garden device (1) according to claim 4, **characterized in that** the trays (2) having a width (Wt) such that the width (Wₜ) of each tray (2) corresponds to only a part of the length (Lᵥ) of the opening (43) of the liquid vessel (4), and
each tray (2) is movable relative the liquid vessel (4) along the length (Lᵥ) of the opening (43) of the liquid vessel (4) in the direction of the width (Wt) of the trays (2).

7. An indoor garden device (1) according to claim 4, **characterized in that** the trays (2) having a width (Wt) and a length (Lt) such that the length (Lt) of each tray (2) being greater than a width (Wᵥ) of the opening (43) of the liquid vessel (4) such that each tray (2) extends over the opening (43) of the liquid vessel (4) on both sides of the opening (43) in the width direction of the liquid vessel (4).

8. An indoor garden device (1) according to claim 4, **characterized in that**:
- the liquid vessel (4) comprises a first frame support surface (44a) provided on a first side of the opening (43) and extending along the length (L_{V}) of opening (43), and a second frame support surface (44b) provided on a second side of the opening (43) and extending along the length (L_{V}) of the opening (43);
- each tray (2) comprises a first tray support surface (22a) and a second tray support surface (22b), the first and second tray support surfaces (22a, 22b) are arranged spaced apart from each other and arranged to extend along the width of the tray (2); and
- the first tray support surface (22a) is supported to the first frame support surface (44a) and the second tray support surface (22b) is supported to the second frame support surface (44b) such that the first and second tray support surfaces (22a, 22b) extend in direction of the length (L_{V}) of the opening (43) and the tray (2) is supported on the open top of the liquid vessel (4) and arranged to slide on the first and second frame support surfaces (44a, 44b) along the length (Lᵥ) of the opening (43).

9. An indoor garden device (1) according to any previous claim, **characterized in that** each plant container (3) is provided with a liquid connection arranged to provide liquid from the liquid vessel (4) to the plant container (3).

## Patentansprüche

1. Innenraumgartenvorrichtung (1) zum Anbauen von Pflanzen, wobei die Innenraumgartenvorrichtung (1) Folgendes umfasst: einen Rahmen (11), mindestens ein Flüssigkeitsgefäß (4) zum Aufnehmen von Flüssigkeit und mindestens zwei Schalen (2), von denen jede eine obere Fläche (21) und mindestens zwei Pflanzenbehälter (3) aufweist, **gekennzeichnet dadurch, dass**
die Pflanzenbehälter (3) sich auf einer gegenüberliegenden Seite der oberen Fläche (21) der Schale (2) erstrecken,
wobei das Flüssigkeitsgefäß (4) einen Boden (41) und sich von dem Boden (41) nach oben erstreckende Seitenwände (42) aufweist, die eine offene Oberseite ausbilden, die eine Öffnung (43) für das Flüssigkeitsgefäß (4) bereitstellt, wobei die offene Oberseite des Flüssigkeitsgefäßes (4) den Rahmen (11) ausbildet und die mindestens zwei Schalen (2) abnehmbar und getrennt derart auf dem Rahmen (11) getragen werden, dass die Schalen (2) mindestens einen Teil der Öffnung (43) des Flüssigkeitsgefäßes (4) abdecken und einen Deckel des Flüssigkeitsgefäßes (4) ausbilden, wobei das mindestens eine Flüssigkeitsgefäß (4) dazu angeordnet ist, Flüssigkeit an die Pflanzenbehälter (3) bereitzustellen;
die mindestens zwei Schalen (2) benachbart auf dem Rahmen (11) getragen werden, der Rahmen (11) Rahmentrageflächen (44) umfasst, die sich auf gegenüberliegenden Seiten der Öffnung (43) des Flüssigkeitsgefäßes (4) in einer Längsrichtung des Flüssigkeitsgefäßes (4) erstrecken, und jede Schale (2) jeweilige Schalentragefläche (22) umfasst, die dazu angeordnet sind, sich entlang einer Breite der Schale (2) zu erstrecken, wobei jede Schale (2) auf dem Rahmen über Trageflächen (44, 22) derart getragen wird, dass die Schalen (2) relativ zu dem Rahmen (11) beweglich sind und dazu angeordnet sind, entlang der Rahmentrageflächen (44) zu gleiten, sodass die Schalentrageflächen (22) in Kontakt mit den entsprechenden Rahmentrageflächen (44) des Flüssigkeitsgefäßes (4) sind, wenn die Schalen relativ zu dem Flüssigkeitsgefäß (4) entlang der Längsrichtung des Flüssigkeitsgefäßes (4) gleiten.

2. Innenraumgartenvorrichtung (1) nach Anspruch 1, **gekennzeichnet dadurch, dass** der Boden (41) und die Seitenwände (42) des Flüssigkeitsgefäßes (4) einen einheitlichen Flüssigkeitsraum (40) für die Flüssigkeit und für die mindestens zwei Schalen (2) ausbilden.

3. Innenraumgartenvorrichtung (1) nach einem der vorherigen Ansprüche, **gekennzeichnet dadurch, dass** die Rahmentrageflächen (44) Schienen aufweisen und die Schalentrageflächen (22) jeweilige Rillen für die Schienen umfassen.

4. Innenraumgartenvorrichtung (1) nach Anspruch 1, **gekennzeichnet dadurch, dass** die Öffnung (43) des Flüssigkeitsgefäßes (4) eine Länge (Lᵥ) aufweist und die Rahmentrageflächen (44) sich entlang der Länge (Lᵥ) der Öffnung (43) erstrecken.

5. Innenraumgartenvorrichtung (1) nach Anspruch 1, **gekennzeichnet dadurch, dass** die Rahmentrageflächen (44) in Längsrichtung sind und sich entlang der Länge (Lᵥ) der Öffnung (43) erstrecken.

6. Innenraumgartenvorrichtung (1) nach Anspruch 4, **gekennzeichnet dadurch, dass** die Schalen (2) eine Breite (Wₜ) derart aufweisen, dass die Breite (Wₜ) jeder Schale (2) nur einem Teil der Länge (Lᵥ) der Öffnung (43) des Flüssigkeitsgefäßes (4) entspricht, und
jede Schale (2) relativ zu dem Flüssigkeitsgefäß (4) entlang der Länge (Lᵥ) der Öffnung (43) des Flüssigkeitsgefäßes (4) in der Richtung der Breite (Wₜ) der Schalen (2) beweglich ist.

7. Innenraumgartenvorrichtung (1) nach Anspruch 4, **gekennzeichnet dadurch, dass** die Schalen (2) eine Breite (Wₜ) und eine Länge (Lt) derart aufweisen, dass die Länge (Lt) jeder Schale (2) größer ist als eine Breite (Wᵥ) der Öffnung (43) des Flüssigkeitsgefäßes (4), derart dass jede Schale (2) sich über die Öffnung (43) des Flüssigkeitsgefäßes (4) auf beiden Seiten der Öffnung (43) in der Breitenrichtung des Flüssigkeitsgefäßes (4) erstreckt.

8. Innenraumgartenvorrichtung (1) nach Anspruch 4, **gekennzeichnet dadurch, dass**:
- das Flüssigkeitsgefäß (4) eine erste Rahmentragefläche (44a), die auf einer ersten Seite der Öffnung (43) bereitgestellt ist und sich entlang der Länge (Lᵥ) von Öffnung (43) erstreckt, und eine zweite Rahmentragefläche (44b), die auf einer zweiten Seite der Öffnung (43) bereitgestellt ist und sich entlang der Länge (Lᵥ) der Öffnung (43) erstreckt, umfasst;
- jede Schale (2) eine erste Schalentragefläche (22a) und eine zweite Schalentragefläche (22b) umfasst, wobei die erste und die zweite Schalentragefläche (22a, 22b) voneinander beabstandet angeordnet sind und dazu angeordnet sind, sich entlang der Breite der Schale (2) zu erstrecken; und
- die erste Schalentragefläche (22a) zu der ersten Rahmentragefläche (44a) getragen wird und die zweite Schalentragefläche (22b) zu der zweiten Rahmentragefläche (44b) getragen wird, derart dass die erste und die zweite Schalentragefläche (22a, 22b) sich in Richtung der Länge (Lᵥ) der Öffnung (43) erstrecken und die Schale (2) auf der oberen Oberfläche des Flüssigkeitsgefäßes (4) getragen wird und dazu angeordnet ist, auf der ersten und der zweiten Rahmentragefläche (44a, 44b) entlang der Länge (Lᵥ) der Öffnung (43) zu gleiten.

9. Innenraumgartenvorrichtung (1) nach einem der vorherigen Ansprüche, **gekennzeichnet dadurch, dass** jeder Pflanzenbehälter (3) mit einer Flüssigkeitsverbindung versehen ist, die dazu angeordnet ist, Flüssigkeit von dem Flüssigkeitsgefäß (4) an den Pflanzenbehälter (3) bereitzustellen.

## Revendications

1. Dispositif de jardin d'intérieur (1) pour la culture de plantes, le dispositif de jardin d'intérieur (1) comprend un cadre (11), au moins un récipient à liquide (4) pour contenir un liquide, et au moins deux plateaux (2) ayant chacun une surface supérieure (21) et au moins deux bacs à plantes (3), **caractérisé en ce que**
les bacs à plantes (3) s'étendent sur un côté opposé de la surface supérieure (21) du plateau (2),
le récipient à liquide (4) ayant un fond (41) et des parois latérales (42) s'étendant du fond (41) vers le haut formant une partie supérieure ouverte fournissant une ouverture (43) au récipient à liquide (4), la partie supérieure ouverte du récipient à liquide (4) formant le cadre (11) et les au moins deux plateaux (2) sont supportés de manière amovible et séparée sur le cadre (11) de telle sorte que les plateaux (2) couvrent au moins une partie de l'ouverture (43) du récipient à liquide (4) et forment un couvercle du récipient à liquide (4), l'au moins un récipient à liquide (4) est agencé pour fournir du liquide aux bacs à plantes (3) ;
les au moins deux plateaux (2) sont supportés de manière adjacente sur le cadre (11), le cadre (11) comprend des surfaces de support de cadre (44) s'étendant sur des côtés opposés de l'ouverture (43) du récipient à liquide (4) dans un sens longitudinal du récipient à liquide (4) et chaque plateau (2) comprend des surfaces de support de plateau (22) respectives agencées pour s'étendre le long d'une largeur du plateau (2), chaque plateau (2) étant supporté sur le cadre via des surfaces de support (44, 22) de telle sorte que les plateaux (2) sont mobiles par rapport au cadre (11) et agencés pour glisser le long des surfaces de support de cadre (44) afin que les surfaces de support de plateau (22) entrent en contact avec les surfaces de support de cadre (44) correspondantes du récipient à liquide (4) lorsque les plateaux glissent par rapport au récipient à liquide (4) le long du sens longitudinal du récipient à liquide (4).

2. Dispositif de jardin intérieur (1) selon la revendication 1, **caractérisé en ce que** le fond (41) et les parois latérales (42) du récipient à liquide (4) forment un espace de liquide uniforme (40) pour le liquide et pour les au moins deux plateaux (2).

3. Dispositif de jardin intérieur (1) selon une quelconque revendication précédente, **caractérisé en ce que** les surfaces de support de cadre (44) présentent des rails, et les surfaces de support de plateau (22) comprennent des rainures respectives pour les rails.

4. Dispositif de jardin intérieur (1) selon la revendication 1, **caractérisé en ce que** l'ouverture (43) du récipient à liquide (4) a une longueur (Lᵥ), et les surfaces de support de cadre (44) s'étendent le long de la longueur (Lᵥ) de l'ouverture (43).

5. Dispositif de jardin intérieur (1) selon la revendication 1, **caractérisé en ce que** les surfaces de support de cadre (44) sont longitudinales et s'étendent le long de la longueur (Lᵥ) de l'ouverture (43).

6. Dispositif de jardin d'intérieur (1) selon la revendication 4, **caractérisé en ce que** les plateaux (2) présentent une largeur (Wt) telle que la largeur (Wt) de chaque plateau (2) correspond uniquement à une partie de la longueur (Lᵥ) de l'ouverture (43) du récipient à liquide (4), et
chaque plateau (2) est mobile par rapport au récipient à liquide (4) le long de la longueur (Lᵥ) de l'ouverture (43) du récipient à liquide (4) dans le sens de la largeur (Wt) des plateaux (2).

7. Dispositif de jardin intérieur (1) selon la revendication 4, **caractérisé en ce que** les plateaux (2) présentent une largeur (Wt) et une longueur (Lt) telles que la longueur (Lt) de chaque plateau (2) est supérieure à la largeur (Wᵥ) de l'ouverture (43) du récipient à liquide (4) de telle sorte que chaque plateau (2) s'étend sur l'ouverture (43) du récipient à liquide (4) des deux côtés de l'ouverture (43) dans le sens de la largeur du récipient à liquide (4).

8. Dispositif de jardin intérieur (1) selon la revendication 4, **caractérisé en ce que** :
- le récipient à liquide (4) comprend une première surface de support de cadre (44a) prévue sur un premier côté de l'ouverture (43) et s'étendant le long de la longueur (Lᵥ) de l'ouverture (43), et une deuxième surface de support de cadre (44b) prévue sur un deuxième côté de l'ouverture (43) et s'étendant le long de la longueur (Lᵥ) de l'ouverture (43) ;
- chaque plateau (2) comprend une première surface de support de plateau (22a) et une deuxième surface de support de plateau (22b), les première et deuxième surfaces de support de plateau (22a, 22b) étant agencées de façon espacée l'une de l'autre et agencées pour s'étendre le long de la largeur du plateau (2) ; et
- la première surface de support de plateau (22a) est supportée par rapport à la première surface de support de cadre (44a) et la deuxième surface de support de plateau (22b) est supportée par rapport à la deuxième surface de support de cadre (44b) de telle sorte que les première et deuxième surfaces de support de plateau (22a, 22b) s'étendent dans le sens de la longueur (Lᵥ) de l'ouverture (43) et que le plateau (2) est supporté sur la partie supérieure ouverte du récipient à liquide (4) et agencé pour glisser sur les première et deuxième surfaces de support de cadre (44a, 44b) le long de la longueur (Lᵥ) de l'ouverture (43).

9. Dispositif de jardin intérieur (1) selon une quelconque revendication précédente, **caractérisé en ce que** chaque bac à plantes (3) est pourvu d'un raccord de liquide agencé pour fournir du liquide depuis le récipient à liquide (4) au bac à plantes (3).
